# EUROPÄISCHE PATENTANMELDUNG

(11) **EP 0 856 673 A2**
(43) Veröffentlichungstag der Anmeldung: **05.08.1998**
(21) Anmeldenummer: 98101172.9
(22) Anmeldetag: 23.01.1998
(51) Int. Cl.: F16C 33/10

(54) **Selbstdruckerzeugende Schrägrillen-Gleitlager**

(30) Priorität: 28.01.1997 AT 112/97
(71) Anmelder: FAIGLE, Heinz, A-6971 Hard (AT)
(72) Erfinder: FAIGLE, Heinz, A-6971 Hard (AT)
(74) Vertreter: Hefel, Herbert, Dipl.-Ing.

(57) **Zusammenfassung**

Die Gleiteinlage dient in selbstdruckerzeugenden Gleitlagerungen für Einrichtungen zum Tragen und/oder Führen von sich relativ zueinander bewegenden Maschinenteilen, wobei die Gleiteinlage zwischen den lagermäßig gepaarten und sich relativ zueinander bewegenden Flächen dieser Maschinenteile vorgesehen ist. Die Gleiteinlage (1) weist eine zur Größe und/oder Form dieser Flächen korrespondierend ausgebildete Größe und/oder Form auf. Die Gleiteinlage (1) ist zwischen diesen Maschinenteilen zumindest in einer Richtung frei beweglich gelagert . In der Gleiteinlage (1) sind in einer der an einer Fläche eines der Maschinenteile (10, 11) anliegenden Oberflächen (2, 3) von Schrägrillen (4, 5) vorgesehen.

## Beschreibung

Die Erfindung bezieht sich auf selbstdruckerzeugende Schrägrillen-Gleitlager und eine dafür bestimmte, zumindest in eine Richtung frei bewegliche Gleiteinlage für Einrichtungen zum Tragen und/oder Führen von sich relativ zueinander bewegenden Maschinenteilen, wobei die Gleiteinlage zwischen den lagermäßig gepaarten und sich relativ zueinander bewegenden Flächen dieser Maschinenteile vorgesehen ist und eine zur Größe und/oder Form dieser Flächen korrespondierend ausgebildete Größe und/oder Form aufweist und die Gleiteinlage zwischen diesen Maschinenteilen zumindest in einer Richtung frei beweglich gelagert ist.

Die in Gruppen angeordneten Schrägrillungen können Schraub-, Spiral-, Konische-, Kalotten-, Keil-, Ebene-Rillungen formen.

Bei den sich relativ gegeneinander bewegenden Maschinenteilen kann es sich um drehende oder schwingende Teile handeln, beispielsweise um Lager für Zapfen von Wellen oder Achsen oder um die Wellen oder Achsen selbst. Handelt es sich um Lager für schwingende Bewegungen, so werden diese in der Regel als Führung bezeichnet. Nach Art der Bauweise wird zwischen Gleitlager und Wälzlager unterschieden. Im vorliegenden Fall handelt es sich um Einrichtungen der ersterwähnten Art. Eine weitere Unterscheidung liegt in der Art der Belastungsrichtung: Radiallager, Querlager, Traglager, Axiallager, Längslager, Stützlager, Spurlager, Festlager oder Loslager. Die Erfindung inkludiert alle diese möglichen Lagertypen. Ein weiterer inkludierter Gleitlagertyp sind die auf Ebenen relativ gegeneinander bewegten Hublager.

Es ist bekannt, bei Einrichtungen der erwähnten Art Gleiteinlagen vorzusehen, die hinsichtlich Größe und Form korrespondierend zu jenen Flächen der Maschinenteile ausgebildet sind, zu welchen sie zumindest in einer Richtung frei beweglich angeordnet sind. Diese Gleiteinlagen besitzen eine glatte Oberfläche. Sie sind bevorzugt aus Kunststoff gefertigt, können aber auch aus metallischen Werkstoffen bestehen.

Diese Gleiteinlagen haben die Aufgabe, Dimensionsänderungen der gepaarten Maschinenteile auszugleichen, die temperatur- oder materialbedingt sein können. Im betriebsmäßigen Einsatz erwärmen sich diese Maschinenteile und dehnen sich aus. Bei der Erwärmung von Kunststoffen ist auch noch damit zu rechnen, daß sie je nach ihrer chemischen Beschaffenheit mehr oder weniger Feuchte aufnehmen, was ebenfalls Dimensionsänderungen verursacht.

Bekannt ist ferner, Gleitlager als Schrägrillenlager auszubilden. Solche Lager sind bevorzugt selbstdruckerzeugende Lager, bei denen zumindest eine der beiden Laufflächen mit Schrägrillen versehen ist. Wenn sich bei einem solchen Lager die Laufflächen in der richtigen Richtung gegeneinander bewegen, entsteht in dem Schmierfilm dazwischen ein Überdruck als Folge der Pumpwirkung der Rillen. Hiedurch sorgt der Schmierstoff dafür, daß die Laufflächen voneinander getrennt bleiben. Dadurch ist es möglich, Gleitlager mit geringer Reibung und kleinen Abmessungen zu bauen. Zur Schmierung dienen Fette, Ole, aber auch Luft oder Wasser oder besondere chemische Verbindungen.

Ziel und Aufgabe der Erfindung ist es, die Reibungs- und Verschleißeigenschaften der eingangs erwähnten Einrichtungen zu verbessern, was erfindungsgemäß dadurch gelingt, daß auf der Oberfläche von einer der Seiten der Gleiteinlage oder auf der Oberfläche der anderen Seite der Gleiteinlage oder auf der Oberfläche von einem der die Gleiteinlage einschließenden Maschinenteile oder der Oberfläche der anderen der die Gleiteinlage einschließenden Maschinenteile oder mehreren oder allen der den genannten Oberflächen anliegenden anderen Oberflächen Schrägrillen vorgesehen sind und neben der Anzahl von Schrägrillen wählbar ist, welcher der Gleitflächen eine als allein bestimmte Schrägrillung zugeteilt wird oder welchen der mehreren Gleitflächen die mehreren ausgewählten Schrägrillungen zugeteilt werden.

Durch die erfindungsgemäße Ausbildung der Gleiteinlage ist sichergestellt, daß die Schmier- oder Trennstoffe immer wieder zum Mittelbereich der Gleiteinlage gelangen, um dort eine von den Druckenden der Schrägrillen ausgehende, eine kontinuierliche Nachfüllung des Lagerspaltes optimale Schmierung oder Trennung zu bewirken bzw. aufrechtzuerhalten.

Die Erfindung wird anhand der Zeichnung näher erläutert, die verschiedene Ausführungsbeispiele zeigt, ohne dadurch die Erfindung auf diese gezeigten Ausführungsbeispiele einzuschränken. Es zeigen:
- Fig. 1: eine als Gleitlagerbuchse ausgebildete Gleiteinlage für Wellen oder Achsen;
- Fig. 2: eine als Gleitlager ausgebildete Gleiteinlage für Wellen oder Achsen in einer gegenüber Fig. 1 abgeänderten Ausführungsform;
- Fig. 3: einen Abschnitt einer als Gleitlagerbuchse ausgebildeten Gleiteinlage, in die Ebene abgewickelt, in einer dritten Ausführungsform;
- Fig. 4: eine ebene Abwicklung einer Gleitlagerbuchse in einer weiteren Ausführungsvariante;
- Fig. 5: eine ebene Abwicklung einer Gleitlagerbuchse in einer fünften Ausführungsvariante;
- Fig. 6: eine als ebene Platte ausgebildete Gleiteinlage für eine Führung;

Die Fig. 4 und 5 zeigen jeweils die äußere Oberfläche einer in die Ebene abgewickelten Gleitlagerbuchse. Die an der äußeren Oberfläche und an der inneren Oberfläche vorgesehenen Keilrillen 4 und 5 kreuzen sich, und an den Kreuzungsstellen sind Querbohrungen 9 vorgesehen, die die Rillen beider Seiten miteinander verbinden. Die beiden in diesem Ausführungsbeispiel geschilderten Ausführungsformen unterscheiden sich durch die relative Lage der Keilrillen der äußeren Oberfläche und der inneren Oberfläche. Durch diese Bohrungen steht der Schmierstoff der einen Seite der Gleiteinlage mit dem der anderen Seite in Verbindung und kann bewirken oder fördern,
daß entweder eine druckneutrale Gleitstelle (SRG-DN) entsteht, indem die Schrägrillen der beiden Oberflächen so gelegt sind, daß sich ihre Kreuzungen (Bohrungen) nahe der Mitte oder in der Mitte der Längen von Schenkeln (auch wenn sie allein stehen) oder der Gesamtlängen von ganzen Schrägrillen befinden (Zeichnungen Z 6M und Z 6N)
oder eine selbstdruckerzeugende Gleitstelle (SRG-SDE) entsteht, indem die Schrägrillen der beiden Oberflächen so gelegt sind, daß sich ihre Kreuzungen mit den dem Schmierstoff-Strom entgegenstehenden Enden der Schrägrillen oder nahe von diesen befinden (Zeichnungen Z 6O oder Z 6P).

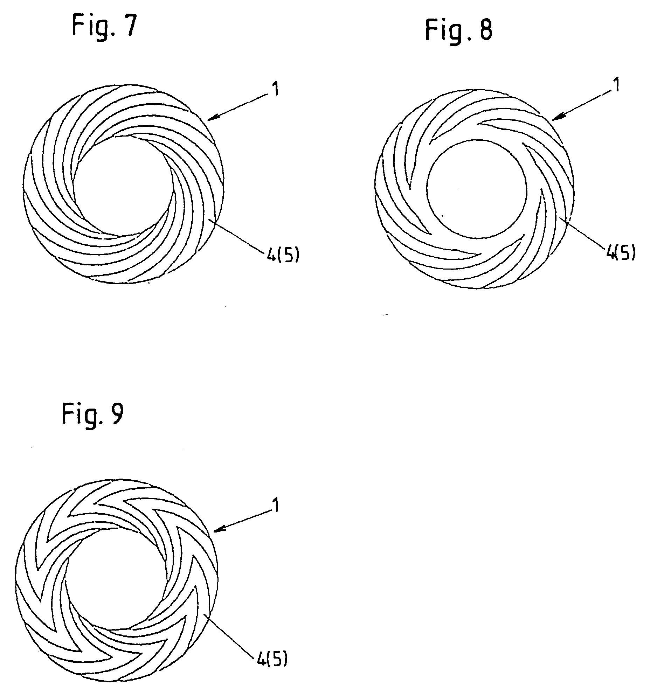

- die Fig. 7, 8 und 9: jeweils eine scheibenförmige Gleiteinlage für ein Axiallager mit unterschiedlicher Gestaltung der Keil- bzw. Spiralrillen;

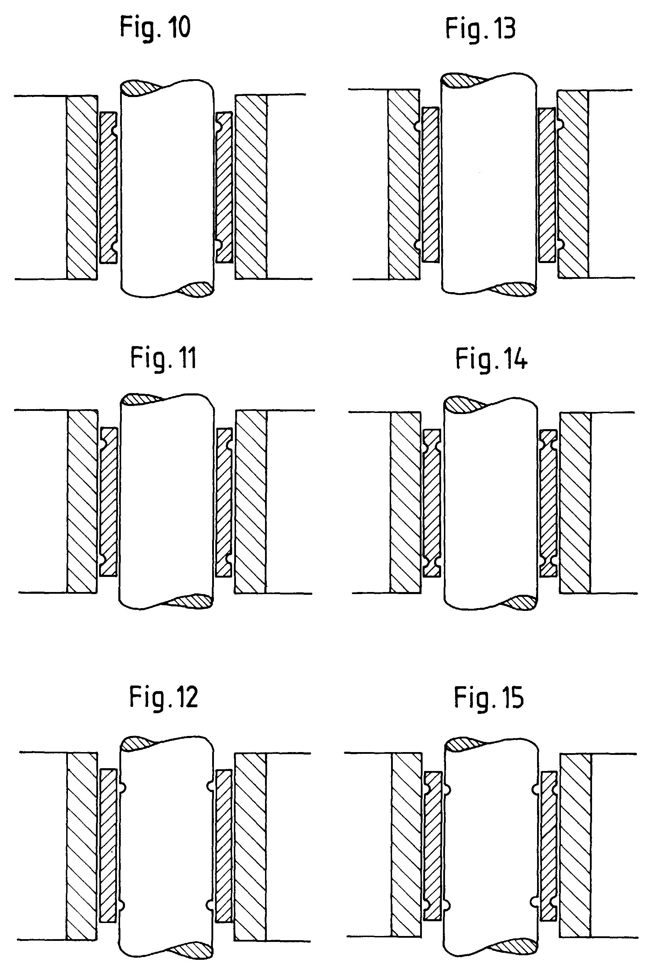

- die Fig. 10 bis 29: verschiedene Ausgestaltungen der Erfindung.

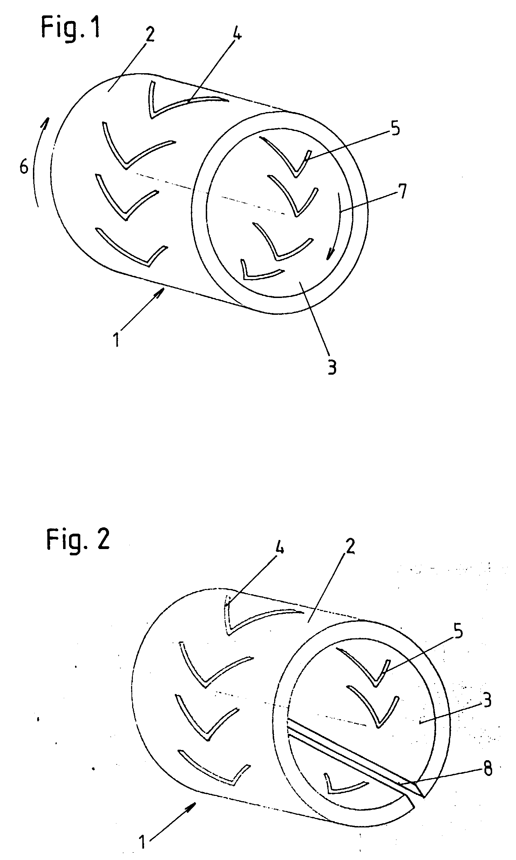

Die Gleiteinlage 1 nach Fig. 1 ist als Gleitlagerbuchse ausgebildet, die sowohl an ihrer äußeren Oberfläche 2 wie auch an ihrer inneren Oberfläche 3 jeweils in Umfangrichtung aufeinanderfolgende Schrägrillen 4 und 5 aufweist, wobei diese Keilrillen innen und außen gegenläufig angeordnet sind. Diese Gleitlagerbuchse ist von einem nicht dargestellten Lagergehäuse aufgenommen und von einer Welle oder einem Wellenzapfen durchsetzt. Der Pfeil 6 deutet die Bewegungsrichtung der Gleitlagerbuchse 1 im nicht dargestellten Lagergehäuse an, der Pfeil 7 die Drehrichtung der Welle bzw. des Wellenzapfens. Führt die Welle oder der Wellenzapfen Drehbewegungen in beiden Richtungen aus, so können entweder zwei nebeneinander liegende Gleitlagerbuchsen vorgesehen werden mit jeweils korrespondierenden gegenläufigen Spiral- oder Keilrillen, oder in ein und derselben Gleitlagerbuchse 1 sind jeweils an der inneren und an der äußeren Oberfläche 2 bzw. 3 Keilrillen mit zueinander entgegengesetzt gerichteter Keilrichtung vorgesehen. Aus Gründen der Übersichtlichkeit ist in Fig. 1 innen und außen an der Gleitlagerbuchse jeweils nur eine Reihe von Keilrillen 4 bzw. 5 gezeigt. Es können jeweils mehrere Reihen solcher Keilrillen vorgesehen werden, die nebeneinander angeordnet sind oder sich gegenseitig überlagern oder überdecken.

Auch Fig. 2 zeigt eine Gleitlagerbuchse, die sich von der erstbesprochenen nur dadurch unterscheidet, daß sie geschlitzt ist, wobei dieser Schlitz 8 schräg verläuft. Im übrigen gilt auch für diese Gleitlagerbuchse nach Fig. 2 das vorstehend Gesagte. Gleitlagerbuchsen dieser Art werden bevorzugt dann verwendet, wenn sie aus Kunststoff gefertigt sind. Durch den hier vorgesehenen schmalen Schlitz 8 werden Wärme- und Feuchtedehnungen im wesentlichen in Umfangsrichtung aufgenommen und dadurch Veränderungen im Durchmesser weitgehend vermieden.

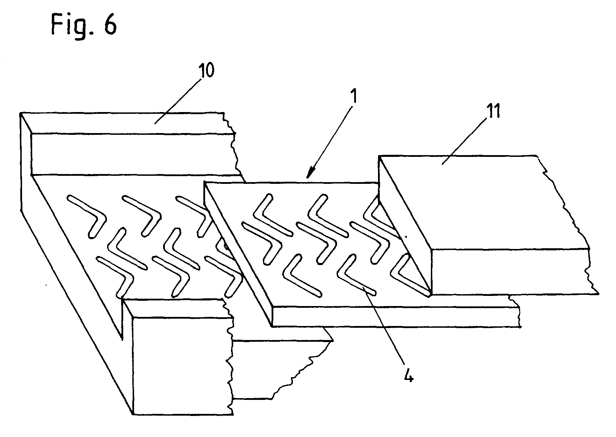

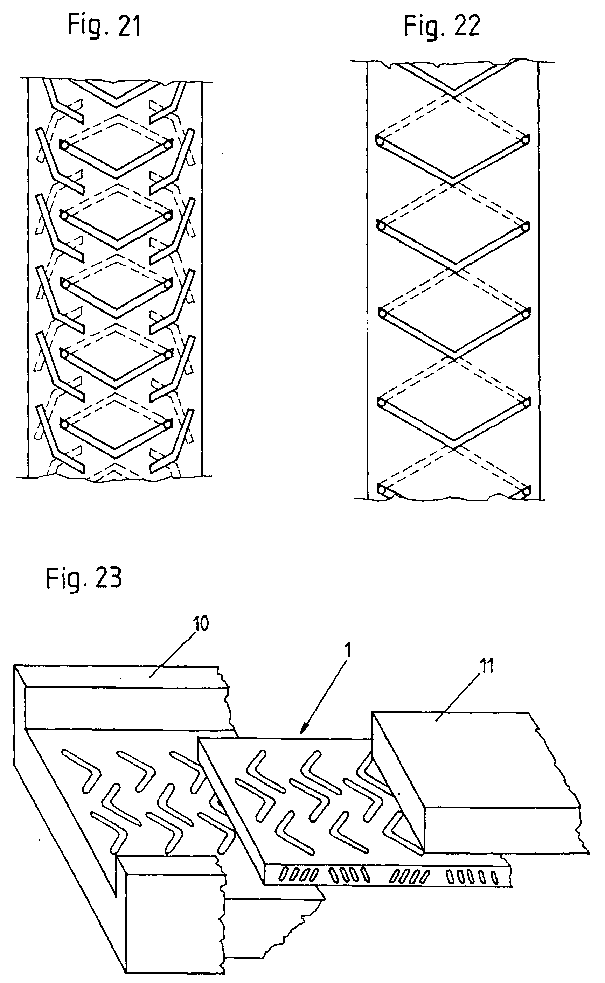

Fig. 23 veranschaulicht eine Führung für hin- und hergehende Maschinenteile 10 und 11, wobei hier die Gleiteinlage 1 als ebene Platte oder als Streifen ausgebildet ist, die oder der zweckmäßigerweise auf beiden Oberflächen Keilrillen 4 trägt, wobei auch hier diese Keilrillen an der oberen Seite und an der unteren Seite durch Querbohrungen 9 verbunden sein können. Auch die in den vorhergehenden Figuren besprochenen Gleiteinlagen können als ebener Streifen oder als Platte ausgebildet sein. Bei der in Fig. 6 schematisch gezeigten Führung ist auch die eine Fläche des Maschinenteiles 10, an der die Gleiteinlage 1 auf- bzw. anliegt, ebenfalls mit Keilrillen versehen.

Die Fig. 7 bis 9 zeigen in Draufsicht scheibenförmige Gleiteinlagen für Axiallager mit unterschiedlicher Rillengestaltung. Auch in der hier nicht sichtbaren Unterseite können Rillen vorgesehen werden, wobei auch hier Querbohrungen die Rillen der Oberseite und der Unterseite miteinander verbinden.

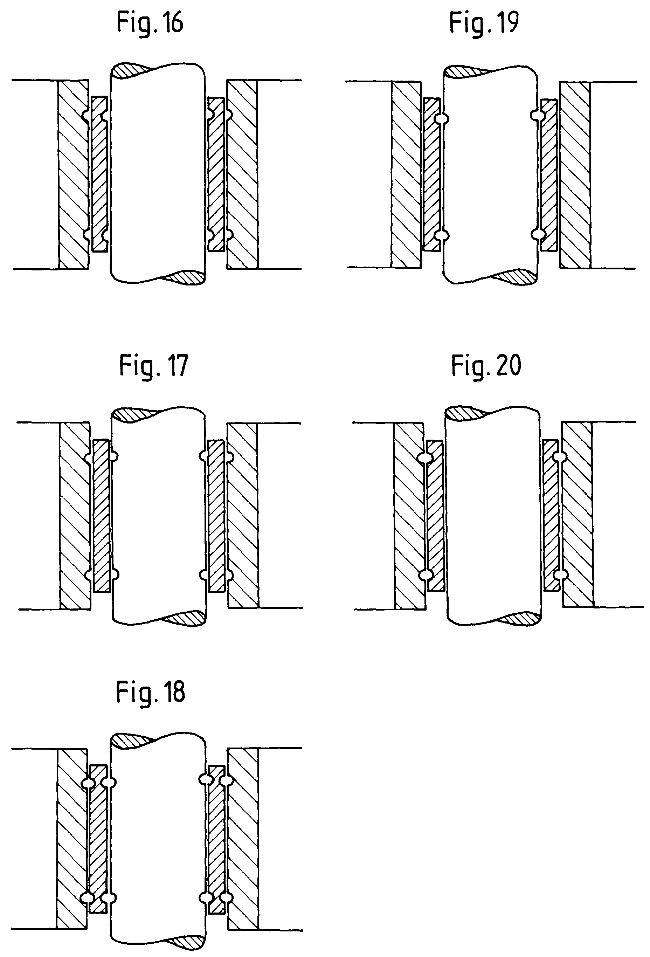

In den Fig. 10 bis 20 sind Beispiele dafür angeführt, welche der Gleitflächen Schräg-, Keil- und/oder Spiralrillen tragen können, wobei allerdings der Einfachheit halber diese Rillen nur jeweils im Randbereich der Lagerflächen angedeutet ist. Es sind hier Ausführungsformen vorgesehen, bei welchen jeweils nur eine der in Relativbewegung zueinander stehenden Flächen glatt/gerillt ausgebildet ist, die beiden anderen Flächen sind glatt. Es sind auch Ausführungsformen möglich, bei denen alle der in Relativbewegung zueinander stehenden Gleitflächen glatt/gerillt gepaart sind (Fig. 14 bis Fig. 17). Wie Fig. 18 veranschaulicht, können alle Flächen, die auch relativ zueinander beweglich gelagert sind, gerillt sein. Die Fig. 19 und 20 zeigen Ausführungsformen, bei welchen die gepaarten Flächen gerillt, die anderen glatt sind.

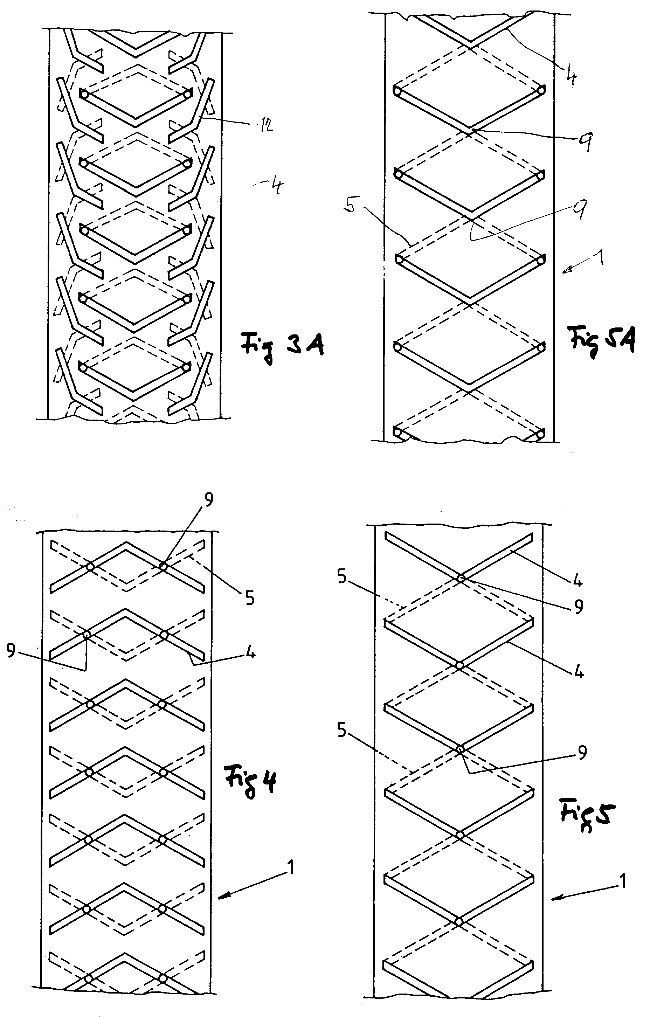

Eine zur Ausführungsform nach Fig. 3 vergleichbare Konstruktion zeigt Fig. 21, bei welcher die Gleiteinlage beidseitig mit Rillen ausgestattet ist, und diese Rillen sind durch Querbohrungen miteinander verbunden. Fig. 22 veranschaulicht eine Gleiteinlage ähnlich jener nach Fig. 4.

Das Lager nach Fig. 23 entspricht im wesentlichen jenem nach Fig. 6, jedoch sind hier noch zusätzlich Schrägrillen auf den schmalen Seitenflächen der Gleiteinlage angeordnet.

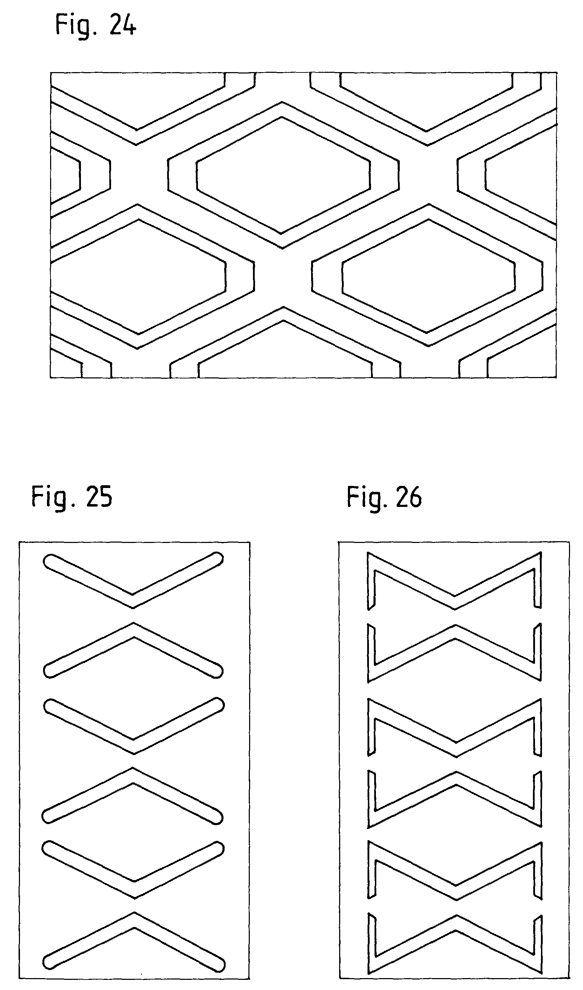

Die Darstellungen nach den Fig. 24 bis 28 veranschaulichen andere zweckmäßige Rillenformen. Sofern sie sich auf einer Gleiteinlage befinden, können solche Rillen beidseitig vorgesehen und miteinander durch Querbohrungen verbunden sein. Es ist auch denkbar, auf einer Gleiteinlage zu beiden Seiten unterschiedliche Rillenformen anzuordnen.

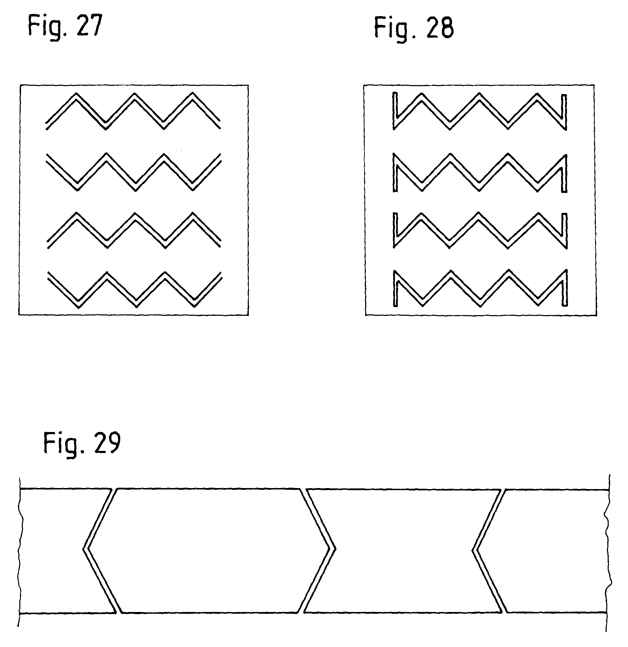

Schlußendlich veranschaulicht noch Fig. 29 eine in die Ebene ausgebreitete geschlitzte Gleitbuchse, die in Umfangsrichtung mehrfach geteilt ist, wobei die Teilungsfugen pfeilspitzenartig verlaufen. Es ist möglich, diesen Teilungsfugen auch einen anderen Verlauf zu geben. Der Verlauf der Teilungsfugen soll aber stets so gestaltet sein, daß die einzelnen Abschnitte der geschlitzten Gleitbuchse formschlüssig ineinandergreifen, so daß ein seitliches, axiales Auswandern eines solchen Abschnittes unterbunden ist.

Die vorstehend besprochenen und in der Zeichnung dargestellten Gleiteinlagen 1 sind hier als zylindrische Buchse, als ebener Streifen bzw. als Kreisscheibe gezeigt. Es liegt im Rahmen der Erfindung, diese Gleiteinlage anders zu gestalten, beispielsweise konisch oder kalottenförmig, stets ist die Gleiteinlage 1 an die Form der zu paarenden Flächen der zu lagernden bzw. führenden Maschinenteile anzupassen.

Ergänzend und der Vollständigkeit halber ist noch erwähnt, daß die Gleiteinlagen unabhängig von ihrer jeweiligen geometrischen Gestaltung mittels Randscheiben oder Randwülsten an den Gehäusen bzw. den Wellen oder Achsen gegen seitliches Herausgleiten gehindert sind. Dies gilt auch in vergleichbarer Form für Führungen, die mit streifenförmigen Gleiteinlagen bestückt sind.

### Legende zu den Hinweisziffern:

- 1: Gleiteinlage
- 2: Oberfläche
- 3: Oberfläche
- 4: Schrägrille
- 5: Schrägrille
- 6: Pfeil
- 7: Pfeil
- 8: Schlitz
- 9: Querbohrung
- 10: Maschinenteil
- 11: Maschinenteil
- 12: Rille

## Patentansprüche

1. Gleitlager und Gleiteinlage mit selbstdruckerzeugenden Schrägrillen für Einrichtungen zum Tragen und/oder Führen von sich relativ bewegenden Maschinenteilen, wobei die Gleiteinlage zwischen den lagermäßig gepaarten und sich relativ zueinander bewegenden Flächen dieser Maschinenteile vorgesehen ist und eine zur Größe und/oder Form dieser Flächen korrespondierend ausgebildete Größe und/oder Form aufweist und die Gleiteinlage zwischen diesen Maschinenteilen zumindest in einer Richtung frei beweglich gelagert ist, dadurch gekennzeichnet, daß auf der Oberfläche von einer der Seiten der Gleiteinlage oder auf der Oberfläche der anderen Seite der Gleiteinlage oder auf der Oberfläche von einem der die Gleiteinlage einschließenden Maschinenteile oder der Oberfläche der anderen der die Gleiteinlage einschließenden Maschinenteile oder mehreren oder allen der den genannten Oberflächen anliegenden anderen Oberflächen Schrägrillen vorgesehen sind und neben der Anzahl von Schrägrillen wählbar ist, welcher der Gleitflächen eine als allein bestimmte Schrägrillung zugeteilt wird oder welchen der mehreren Gleitflächen die mehreren ausgewählten Schrägrillungen zugeteilt werden.

2. Gleiteinlage nach Anspruch 1, dadurch gekennzeichnet, daß deren eine Seite mit ihrer gegenüber liegenden anderen Seite durch Bohrungen verbunden ist.

3. Gleiteinlage nach Anspruch 1 und 2, dadurch gekennzeichnet, daß entweder in die Mitte oder nahe der Mitte der Schrägrillen-Schenkel oder gesamten Schrägrillen deren Kreuzungen gelegt sind und in den Kreuzungsstellen durchbohrt sind oder daß die Schrägrillen so gelegt sind, daß sie sich in ihren Enden oder nahe dieser Enden kreuzen und diese Kreuzungsstellen durchbohrt sind.

4. Gleiteinlage nach Anspruch 1, dadurch gekennzeichnet, daß seitliche Zwischenräume zwischen der Gleiteinlage und ihren seitlichen Begrenzungen als Umströmungsverbindungen zwischen den beiden Seiten der Gleiteinlage offen gehalten sind.

5. Gleiteinlage nach den Ansprüchen 1 bis 4, dadurch gekennzeichnet, daß mit ihr Kombinationen von zwei oder mehreren der Ausbildungsarten laut den vorstehenden Ansprüchen ausgeführt sind.

6. Gleiteinlage nach den vorstehenden Ansprüchen, dadurch gekennzeichnet, daß die Musterungen beider Seiten der Gleiteinlage unterschiedlicher Art sind.

7. Gleiteinlage nach einem der vorstehenden Ansprüche, dadurch gekennzeichnet, daß ihre ebenen Längen oder abgewickelten Längen quer zu den Längen bevorzugt halbiert oder gedrittelt sind und die dazu erforderlichen Schnitte bevorzugt pfeilspitzenartig ausgeführt sind.

8. Gleiteinlage für Einrichtungen zum Tragen und/oder Führen von sich relativ zueinander bewegenden Maschinenteilen, wobei die Gleiteinlage zwischen den lagermäßig gepaarten und sich relativ zueinander bewegenden Flächen dieser Maschinenteile vorgesehen ist und eine zur Größe und/oder Form dieser Flächen korrespondierend ausgebildete Größe und/oder Form aufweist und die Gleiteinlage zwischen diesen Maschinenteilen zumindest in einer Richtung frei beweglich gelagert ist, dadurch gekennzeichnet, daß in der Gleiteinlage (1), zumindest in einer der an einer Fläche eines der Maschinenteile (10, 11) anliegenden Oberflächen (2, 3) Schrägrillen (4, 5) vorgesehen sind.

9. Gleiteinlage nach Anspruch 8, dadurch gekennzeichnet, daß sie an ihren beiden, den lagermäßig gepaarten Flächen der Maschinenteile (10, 11) anliegenden Oberflächen (2, 3) Schrägrillen (4, 5) aufweist.

10. Gleiteinlage nach Anspruch 9, dadurch gekennzeichnet, daß die Schrägrillen (4) an der einen Oberfläche (2) der Gleiteinlage (1) zu den Schrägrillen (5) an der anderen Oberfläche (3) gegenläufig angeordnet sind.

11. Gleiteinlage nach Anspruch 9 oder 10, dadurch gekennzeichnet, daß die Schrägrillen (4, 5) in den beiden Oberflächen (2, 3) durch Querbohrungen (9) miteinander verbunden sind.

12. Gleiteinlage nach Anspruch 9, dadurch gekennzeichnet, daß die Schrägrillen (4, 5) in den beiden Oberflächen (2, 3) sich wenigstens zum Teil kreuzen (Fig. 4, 5).

13. Gleiteinlage nach Anspruch 11 oder 12, dadurch gekennzeichnet, daß die Querbohrungen (9) im Bereich von Kreuzungsstellen der Schrägrillen (4, 5) vorgesehen sind.

14. Gleiteinlage nach einem der Ansprüche 8 bis 13, dadurch gekennzeichnet, daß zumindest eine Fläche eines Maschinenteiles, an der die Gleiteinlage (1) anliegt, ebenfalls Schrägrillen aufweist (Fig. 6).
